# EUROPEAN PATENT APPLICATION

(11) **EP 2 884 380 A1**
(43) Date of publication of application: **17.06.2015**
(21) Application number: 14757467.7
(22) Date of filing: 03.02.2014
(51) Int. Cl.: G06F 3/0482, G06F 3/0338, G06F 3/0362

(54) **OPERATION ASSISTANCE SYSTEM, OPERATION ASSISTANCE METHOD, AND COMPUTER PROGRAM**

(30) Priority: 26.02.2013 JP 2013035804
(71) Applicant: Aisin Aw Co., Ltd., Anjo-shi, Aichi 444-1192 (JP)
(72) Inventor: KAMIYA, Kazuhiro, Anjo-shi Aichi 444-1192 (JP)
(74) Representative: TBK
(86) International application number: PCT/JP2014/052407
(87) International publication number: WO 2014/132750

(57) **Abstract**

An operation assistance system, an operation assistance method, and a computer program that enable a user to select the user's intended candidate for a selected object with a simple operation are provided. Selection candidate objects such as GUI buttons, icons, etc. are classified into a plurality of groups; the classified selection candidate objects are displayed on a liquid crystal display 15; in a case in which a jog dial 45 accepts an operation, it is configured that the group including the selected object is switched in an order in accordance with the accepted operation and the selected object is sequentially switched within the group in an order in accordance with the accepted operation among the plurality of selection candidate objects included in the group; and in a case in which a direction input key 46 accepts an operation, the group including the selected target is switched in an order in accordance with the accepted operation and the selected object is not switched within the group.

## Description

### TECHNICAL FIELD

The present invention relates to an operation assistance system, an operation assistance method, and a computer program that assist an operation of a device.

### BACKGROUND ART

Conventionally, when a user performs an operation with respect to an in-vehicle device such as a navigation device installed in a vehicle, etc., various human-machine interfaces are utilized as a means for accepting the user's operation with respect to the in-vehicle device. In recent years, as one of the human-machine interfaces, an operation device is often utilized, in which a touch panel that accepts a touch operation of the user is provided on a display screen and the touch operation of the user on the touch panel is detected as the user's operation. However, in the operation of the in-vehicle device through the touch panel, it is necessary to touch a finger to the display screen that is placed on a dashboard or an instrument panel, which forces the driver to change the posture for each operation.

Therefore, it has been proposed to provide an operation device to operate the in-vehicle device at a position far from the display screen, thereby enabling the driver to perform an operation of the in-vehicle device without changing the driver's posture. For example, a technology is suggested in Japanese Patent Application; Publication No. 2000-249568, in which operations of a navigation device are performed by operating a jog dial or a button arranged on a remote controller.

### RELATED ART DOCUMENT

### PATENT DOCUMENT

Patent Document 1: Japanese Patent Application; Publication No. JP-A-2000-249568 (pages 4 to 6, Fig. 9)

### SUMMARY OF THE INVENTION

### Problem to be Solved by the Invention

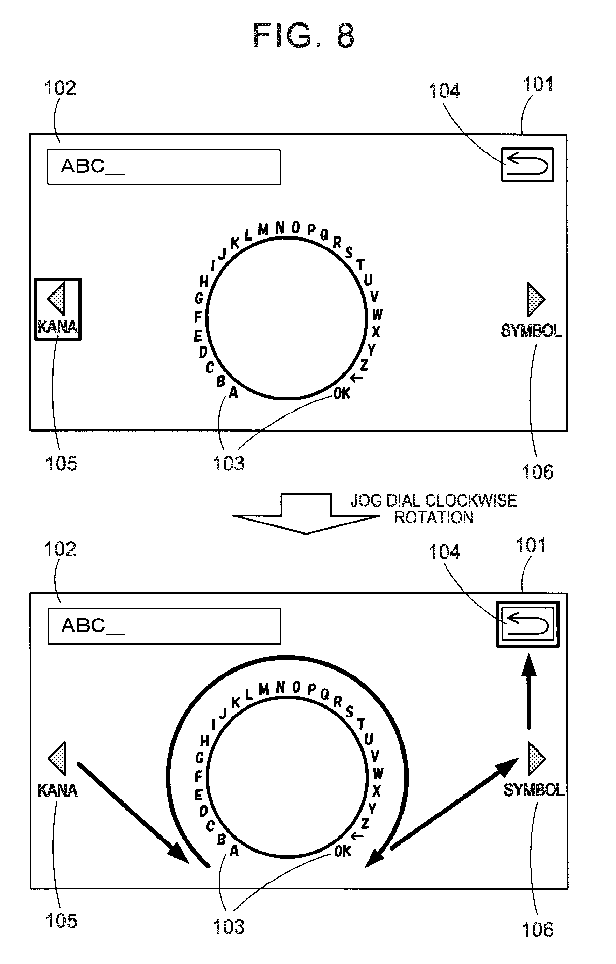

However, when the in-vehicle device is operated through a dial operation or a button operation as described in Patent Document 1, if there are a large number of selection candidate objects serving as candidates that are selected by a user, an operation, for example, inputting letters becomes troublesome in comparison to the operation through a touch panel. For example, FIG. 8 shows a letter input screen 102 displayed on a display screen 101. On the letter input screen 102, in addition to letter input buttons 103 by Graphical User Interface (GUI) corresponding to alphabetical letters "A" to "Z" as selection candidate objects, a button 104 to return to a previous screen, a button 105 to move to the letter input screen for kana, a button 106 to move to the letter input screen for symbol, and the like are arranged. In Patent Document 1, the button which is made to be in a selected status through rotation of a jog dial is configured to be sequentially switched in accordance with a rotating direction of the jog dial. That is, as shown in FIG. 8, to select the button 104 when the button 105 is in a selected status, it has been necessary to select all of the buttons 103 of "A" to "Z" and the button 106 before selecting the button 104, by rotating the jog dial in a right direction.

In order to solve the aforementioned conventional problem, it is an object of the present invention to provide an operation assistance system, an operation assistance method, and a computer program that enable a user to select the user's intended candidate for a selected object with a simple operation even when a large number of candidates for the selected object are provided on a display screen.

### Means for Solving the Problem

To achieve the aforementioned object, an operation assistance system, an operation assistance method, and a computer program according to the present invention provides: an operation assistance system provided with a first operation input device (45) and a second operation input device (46) that accept an operation of a user and a display screen (15) that displays selection candidate objects (52 to 55) serving as candidates that are selected by the user; an operation assistance method for assisting an operation on a device using the system; and a computer program that causes the system to realize the following. Specifically, the operation assistance system is characterized by including: object display means (13) for classifying a plurality of selection candidate objects into a plurality of groups and displaying the classified plurality of selection candidate objects on the display screen; and object switch means (13) for sequentially switching a selected object that is a selection candidate object in a selected status among the plurality of selection candidate objects displayed on the display screen, based on an operation accepted by the first operation input device and the second operation input device, wherein the object switch means, in a case in which the first operation input device accepts an operation, switches the group including the selected object in an order in accordance with the accepted operation and sequentially switches within the group the selected object in the order in accordance with the accepted operation among the plurality of selection candidate objects included in the group; and in a case in which the second operation input device accepts an operation, switches the group including the selected object in an order in accordance with the accepted operation and does not switch the selected object within the group.

Note that the "selection candidate object" is, for example, buttons and icons by GUI, etc.

### Effects of the Invention

In the operation assistance system, the operation assistance method, and the computer program according to the present invention including the aforementioned configuration, when making the user perform an operation to select any one of the plurality of selection candidate objects displayed on the display screen, even if there are a large number of selection candidate objects, it is possible to make the user select the user's intended selection candidate object with a simple operation. For example, when it is necessary to switch the selected object within one group (for example, when repeatedly inputting letters), it is possible to make the user perform an operation using the first operation input device. When it is necessary to switch the selected object between groups (for example, when repeatedly changing screens), it is possible to make the user perform an operation using the second operation input device. In addition, it is possible to make the user select and operate the user's desired selection candidate object with a smaller number of operations, compared to when using only the first operation input device, by selecting a group using the second operation input device and switching the selected object within the group using the first operation input device.

### BRIEF DESCRIPTION OF THE DRAWINGS

[FIG. 1] FIG. 1 is a block diagram showing a schematic structure of an operation assistance system according to a present embodiment.
[FIG. 2] FIG. 2 shows an allocation mode of an operation input device.
[FIG. 3] FIG. 3 is a flow chart of an operation assistance process program according to the present embodiment.
[FIG. 4] FIG. 4 shows a letter input screen.
[FIG. 5] FIG. 5 shows a group classification of selection candidate objects arranged in the letter input screen.
[FIG. 6] FIG. 6 is a specific example of a switch operation of a selected object.
[FIG. 7] FIG. 7 shows a variation example.
[FIG. 8] FIG. 8 shows a problem in a conventional technology.

### MODES FOR CARRYING OUT THE INVENTION

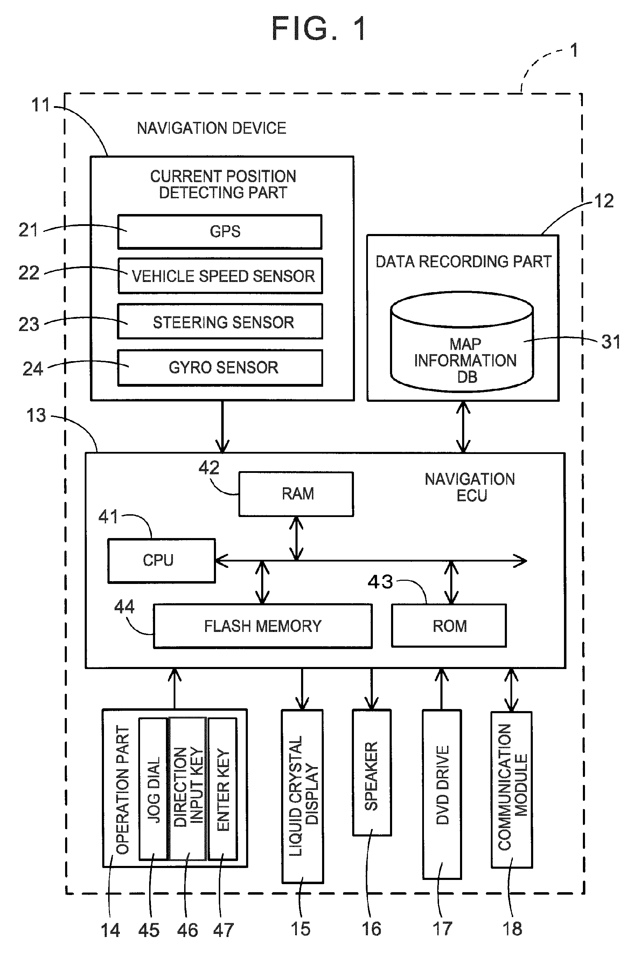

An operation assistance system according to the present invention is described in detail below with reference to an embodiment, in which the operation assistance system is realized with a navigation device, in conjunction with the accompanying drawings. Initially, a schematic structure of a navigation device 1 according to the present embodiment is described in detail with reference to FIG. 1. FIG. 1 is a block diagram showing the navigation device 1 according to the present embodiment.

As shown in FIG. 1, the navigation device 1 according to the present embodiment includes: a current position detection part 11 that detects a current position of a vehicle mounted with the navigation device 1; a data recording part 12 in which various kinds of data is recorded; a navigation ECU 13 that performs various kinds of arithmetic processes based on input information; an operation part 14 that accepts an operation of a user; a liquid crystal display 15 that displays a map image of the vicinity of the vehicle and facility information regarding facilities to the user; a speaker 16 that outputs audio guidance regarding route guidance; a DVD drive 17 that reads out a DVD serving as a storage medium; a communication module 18 that performs communication with information centers such as a probe center, a VICS (a registered trademark: Vehicle Information and Communication System) center, and the like.

Hereinafter, the respective components of the navigation device 1 are explained.

The current position detection part 11 includes at least one of a GPS 21, a vehicle speed sensor 22, a steering sensor 23, a gyro sensor 24, and the like, and can detect a current position and a bearing of the vehicle, a traveling speed of the vehicle, a current time, and the like. Here, in particular, the vehicle speed sensor 22 is a sensor for detecting a moving distance and a speed of the vehicle, generates pulses in accordance with a rotation of drive wheels of the vehicle, and outputs pulse signals to the navigation ECU 13. Subsequently, by counting the number of generated pulses, the navigation ECU 13 calculates a rotation speed of the drive wheels and the moving distance. Note that the navigation device 1 is not required to be provided with all the aforementioned four kinds of sensors, and the navigation device 1 may be provided with only one or a plurality of kinds of sensors among them.

The data recording part 12 is provided with a hard disk (not shown) serving as an external storage device and a recording medium, and a recording head (not shown) serving as a driver for reading a map information DB 31, a predetermined program, and the like, which are recorded in the hard disk, and writing predetermined data in the hard disk. The data recording part 12 may include a memory card, or an optical disk such as a CD, a DVD, and the like, in place of the hard disk. In addition, the map information DB 31 may be stored in an external server and the navigation device 1 may acquire data through communication.

The map information DB 31 is storage means for storing, for example, link data regarding roads (links), node data regarding node points, intersection data regarding intersections, point data regarding points of facilities and the like, map display data for displaying a map, route search data for searching for routes, point search data for searching for points, and the like.

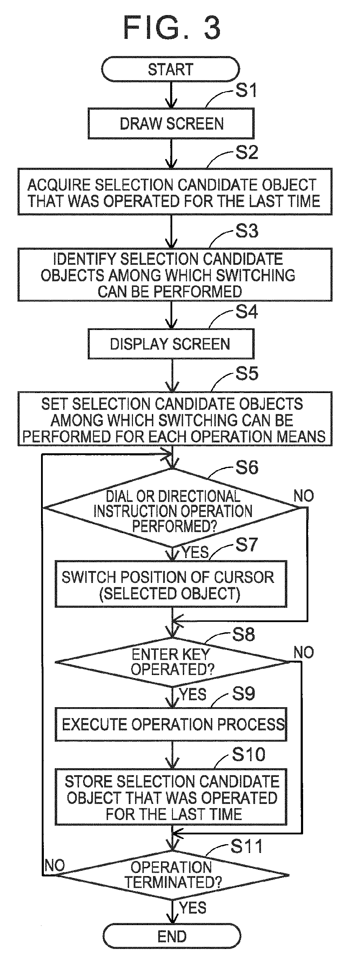

On the other hand, the navigation ECU (electric control unit) 13 is an electronic control unit that performs overall control of the navigation device 1. The navigation ECU 13 is provided with: a CPU 41 serving as a computing device and a control device; internal storage devices such as a RAM 42 used as a working memory when the CPU 41 executes various computing processing and in which route data when the route has been calculated, and the like, are stored, a ROM 43 which records a program for control, and an operation assistance process program described later (refer to FIG. 3), and a flash memory 44 which records a program read from the ROM 43; and the like. In addition, the navigation ECU 13 functions as various kinds of means serving as processing algorithms. For example, object display means classifies a plurality of selection candidate objects serving as candidates that are selected by a user into a plurality of groups and displays the classified plurality of selection candidate objects on the a liquid crystal display 15. Object switch means sequentially switches a selection candidate object that is in a selected status among the plurality of selection candidate objects displayed on the liquid crystal display 15, based on an operation accepted by an operation part 14. Operation means operates the selection candidate object in the selected status among the selection candidate objects based on the operation of the user.

The operation part 14 is operated when inputting a departure point as a travel starting point and a destination as a travel end point. Especially, in the present embodiment, the operation part 14 is placed, separately from the navigation device 1, at a position at which a driver of the vehicle can operate the operation part 14. Specifically, the operation part 14 is placed on an instrument panel, a spoke of a steering, a shift lever, a remote controller, or the like. In addition, the operation part 14 includes a plurality of operation input devices such as :a jog dial 45 that accepts a dial operation by a user; a direction input key 46 that accepts a directional instruction operation by the user; and an enter key 47 that executes an operation of the selection candidate object in a selected status (for example, executes a selected menu icon when the menu icon has been selected, inputs the letter corresponding to a selected letter input button when the letter input button has been selected). The navigation ECU 13 performs control to execute the corresponding various kinds of operations based on signals outputted upon rotating or pressing the respective operation input devices.

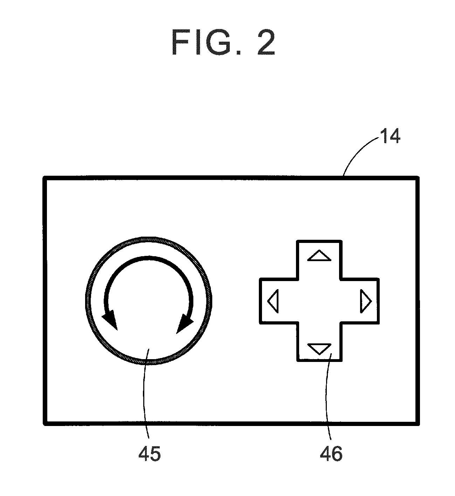

Here, FIG. 2 particularly shows the jog dial 45 and the direction input key 46 among the operation input devices forming the operation part 14. The jog dial 45 is a dial that is rotatably supported so as to rotate clockwise (the right direction) or rotate counterclockwise (the left direction), and sequentially switches the selection candidate object in a selected status among a plurality of selection candidate objects (buttons or icons by GUI) displayed on the liquid crystal display 15 in accordance with the rotational direction operated as mentioned below. In addition, the direction input key 46 is a cross-shaped key on which pressing operations to four directions of the left, right, top, and down (or, eight directions including four diagonal directions) are available, and sequentially switches the selection candidate object in a selected status among a plurality of selection candidate objects (buttons and icons by GUI) displayed on the liquid crystal display 15 in accordance with the direction operated as mentioned below. In FIG. 2, the jog dial 45 and the direction input key 46 are closely placed. However, these may be distantly placed. For example, the jog dial 45 may be placed on the left side of a driver seat and the direction input key 46 may be placed on the right side of the driver seat.

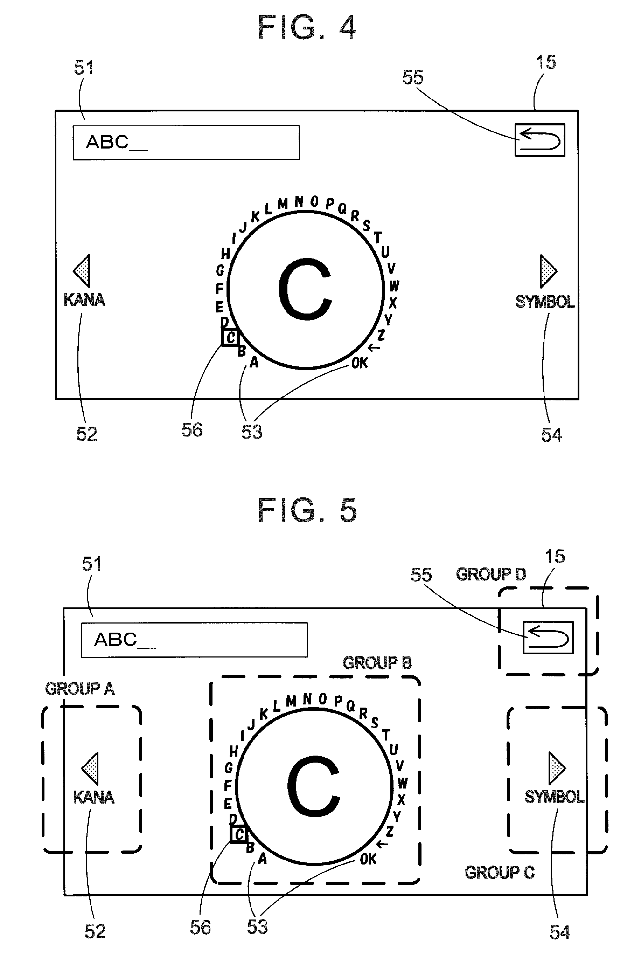

On the liquid crystal display 15, a menu screen, a letter input screen, a map image including roads, traffic information, operation guidance, key guidance, an expected travel route from a departure point to a destination, guidance information along the expected travel route, news, weather forecast, time, E-mail, TV programs, and the like are displayed. In addition, especially in the menu screen, the letter input screen, and the like, a plurality of selection candidate objects such as buttons and icons by GUI serving as candidates that are selected by the user are displayed (refer to FIG. 4). In addition, in place of the liquid crystal display 15, a HUD to project an image on a front glass and a HMD to wear on the driver's head may be utilized.

The speaker 16 outputs audio guidance for traveling the expected travel route based on an instruction from the navigation ECU 13, and the traffic information.

The DVD drive 17 is a drive capable of reading data recorded in the recording medium such as a DVD, a CD, and the like. The DVD drive 17 plays music and images, updates the map information DB 31 based on the read data, and the like.

The communication module 18 is a communication device for receiving the traffic information including congestion information, regulation information, traffic accident information, and the like, which is transmitted from a traffic information center such as a VICS center, a probe center, and the like. The communication module 18 corresponds to a cellular phone and a DCM, for example.

Subsequently, the operation assistance process program that is executed by the navigation ECU 13 on the navigation device 1 including the aforementioned configuration is explained with reference to FIG. 3. FIG. 3 is a flow chart of the operation assistance process program according to the present embodiment. Here, the operation assistance process program is a program that is executed after the navigation device 1 receives a predetermined operation to display the menu screen, the letter input screen, or the like, and selects using the operation part 14 a selection candidate object to make it subject to operation from a plurality of selection candidate objects displayed on the liquid crystal display 15 and performs the operation of the selected selection candidate object. The program shown by the flow chart in FIG. 3 is stored in the RAM 42 or the ROM 43 provided in the navigation device 1, and executed by the CPU 41.

Initially, at step (hereinafter, referred to as S) 1 in the operation assistance process program, the CPU 41 draws, based on an accepted operation, the menu screen or the letter input screen that will be target for display with respect to the RAM 42. The menu screen, the letter input screen, and the like include a plurality of selection candidate objects such as icons and buttons by GUI serving as candidates that are selected by the user.

FIG. 4 particularly shows the letter input screen 51 that is drawn in the RAM 42 at S1 and thereafter displayed on the liquid crystal display 15. As shown in FIG. 4, a large number of buttons by GUI are placed on the letter input screen 51 as the selection candidate objects. Specifically, a button 52 to move to the letter input screen for kana, letter input buttons 53 corresponding to alphabetical letters of "A" to "Z," a button 54 to move to the letter input screen for symbol, a button 55 to return to the previous screen are placed. In addition, in the letter input screen 51, a cursor 56 is drawn so as to surround the selection candidate object (hereinafter, referred to as selected object) in a selected status and displayed so as to be distinguishable from other selection candidate objects. For example, the example in FIG. 4 shows that the letter input button 53 of "C" is currently selected. When the enter key 47 is pressed in the status shown in FIG. 4, the letter "C" will be inputted.

Next, at S2, the CPU 41 acquires a selection candidate object (hereinafter, referred to as lately operated object) that was operated for the last time among the selection candidate objects included in the screen drawn at S1. Here, the lately operated object is a selection candidate object that was in a selected status and operated for the last time by pressing the enter key 47 (for example, an execution of a selected menu icon when the menu icon has been selected, an input of the letter corresponding to a selected letter input button when the letter input button has been selected, and the like). In addition, as the lately operated object, the selection candidate object that was operated for the last time is stored for each group at S10 that is described later. Consequently, at S2, the CPU 41 acquires the lately operated object for each group.

The selection candidate objects displayed on the liquid crystal display 15 in the present embodiment are classified into a plurality of groups. Specifically, the selection candidate objects are classified by type of the selection candidate object into groups. For example, according to the example shown in FIG. 5, the buttons 52 to 55 are classified by type into four groups of A to D. The type of the selection candidate object is determined in consideration of control contents (for example, a letter input) when the selection candidate object has been operated, allocation, shape, and the like. For example, according to the example shown in FIG. 5, a plurality of letter input buttons 53 relating to letter inputs is classified into the same group and other buttons are classified into different groups. The number of selection candidate objects classified into a group may be singular or plural. In the example shown in FIG. 5, the groups A, C, and D each includes only one button. The group B includes 28 buttons relating to letter inputs for "A" to "OK." In the groups into which only one button is classified, the button necessarily corresponds to the lately operated object. Therefore, it is not necessary to store the lately operated object for such group.

Subsequently, at S3, the CPU 41 acquires, from the selection candidate objects included in the screen drawn at S1, the selection candidate objects among which switching (selection) can be performed through an operation of the jog dial 45 and an operation of the direction input key 46. For example, when the letter input screen 51 shown in FIG. 4 is drawn, the buttons 52 to 55 are selected as the selection candidate objects among which switching can be performed through an operation of the jog dial 45 and an operation the direction input key 46.

Thereafter, the CPU 41 displays the menu screen or the letter input screen drawn in the RAM 42 at S1 toward the liquid crystal display 15 at S4.

Next, the CPU 41 sets, for each operation means, selection candidate objects among which switching (selection) can be performed through an operation of the jog dial 45 and an operation of the direction input key 46 from the selection candidate objects included in the screen displayed at S4. Here, in the present embodiment, it is configured that, when an operation through the jog dial 45 is accepted, the group including the selected object is switched in the order in accordance with the rotational direction and the selected object is sequentially switched within the group in the order in accordance with the rotational direction among the plurality of selection candidate objects included in the group. In addition, it is configured that, when an operation through the direction input key 46 is accepted, the group including the selected object is switched in the order in accordance with the accepted directional instruction and the selected object is not switched within the group.

Consequently, when the letter input screen 51 shown in FIG. 5 is displayed, all of the buttons 52 to 55 that were acquired at S3 are determined independently of groups as the selection candidate objects among which switching can be performed using the jog dial 45. On the other hand, the lately operated objects of the respective groups A to D are determined from the buttons 52 to 55 that were acquired at S3 as the selection candidate objects among which switching can be performed using the jog dial 45.

Subsequently, at S6, the CPU 41 determines whether the jog dial 45 or the direction input key 46 have been operated. When it is determined that the jog dial 45 or the direction input key 46 has been operated (S6: YES), the procedure proceeds to S7. On the other hand, when it is determined that neither the jog dial 45 nor the direction input key 46 has been operated (S6: NO), the procedure proceeds to S8.

At S7, the CPU 41 changes the position of the cursor 56 based on the received operation of the jog dial 45 or the direction input key 46 (that is, switches the selected object). Specifically, the selected object is sequentially switched in the order in accordance with the rotational direction or the instructed direction among the selection candidate objects set for each operation means at S6.

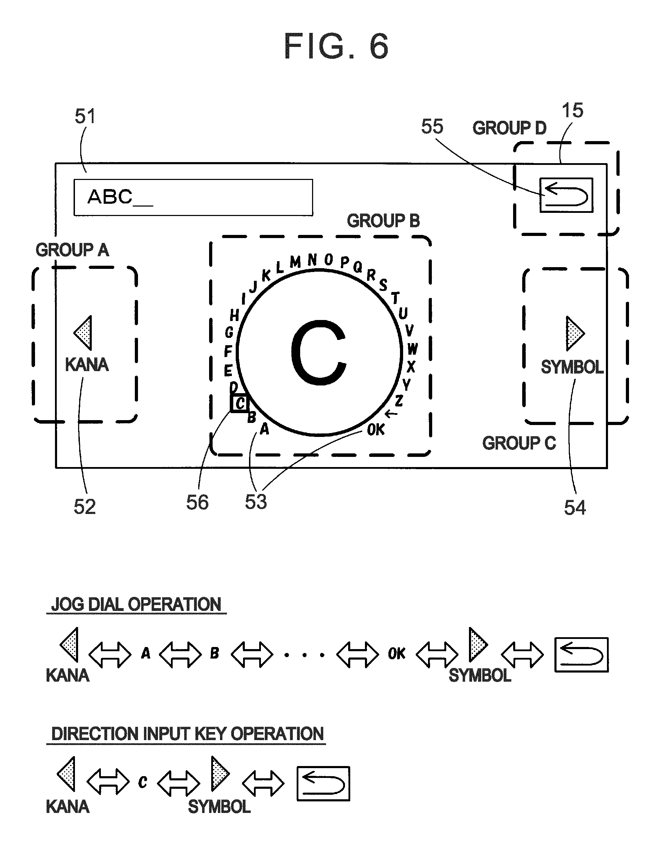

Hereinafter, a switch operation of the selected object at S7 is explained with reference to a specific example in conjunction with FIG. 6.

As shown in FIG. 6, when an operation through the jog dial 45 is accepted, the group including the selected object is switched in the order in accordance with the rotational direction. That is, when the jog dial 45 is rotated in the right direction, the group including the selected object is switched in the order of the group A, the group B, the group C, and the group D (in the opposite order when rotated in the left direction). In addition, the selected object is sequentially switched within the group in the order in accordance with the rotational direction among a plurality of selection candidate objects included in the group. Consequently, when the jog dial 45 is rotated in the right direction, the selected object is switched in the order of the button 52, the letter input button 53 of "A," the letter input button 53 of "B," the letter input button 53 of "C,"... (in the opposite direction when rotated in the left direction). Note that, in a case in which an operation using the jog dial 45 is accepted, all the selection candidate objects included in the group are selected as the selected object basically in an order in accordance with the rotational direction, and thereafter, the group including the selected object is switched to the next group.

On the other hand, as shown in FIG. 6, when an operation through the direction input key 46 is accepted, the group including the selected object is switched in the order in accordance with the instructed direction. That is, when the direction input key 46 is directionally instructed in the right direction, the group including the selected object is switched in the order of the group A, the group B, the group C, and the group D (in the opposite order when rotated in the left direction). In addition, within the group, only the lately operated object is selected and the selected object is not switched. Consequently, when the direction input key 46 is directionally instructed in the right direction, the selected object is switched in the order of the button 52 that is the lately operated object of the group A, the letter input button 53 of "C" that is the lately operated object of the group B, the letter input button 54 that is the lately operated object of the group C, and the button 55 that is the lately operated object of the group D (in the opposite direction when rotated in the left direction).

As a result, even when a large number of selection candidate objects are allocated on the display screen, the user can select the user's intended selection candidate object with a simple operation by making the user perform an operation using the jog dial 45 in a case in which it is necessary to switch the selected object within one group (for example, when repeatedly inputting letters) and making the user perform an operation using the direction input key 46 in a case in which it is necessary to switch the selected object between groups (for example, when repeatedly changing screens). In addition, it becomes possible to select and operate the user's desired selection candidate object with a smaller number of operations by selecting a group using the direction input key 46 and switching the selected object within the group using the direction input key 46, compared to when using only the jog dial 45.

Subsequently, at S8, the CPU 41 determines whether the enter key 47 has been operated. When it is determined that the enter key 47 has been operated (S8: YES), the procedure proceeds to S9. On the other hand, when it is determined that the enter key 47 has not been operated (S8: NO), the procedure proceeds to S11.

At S9, the CPU 41 performs the operation corresponding to the selection candidate object that is currently in a selected status. For example, when the menu icon is selected, the selected menu icon is executed. When a letter input button is selected, an input of the letter corresponding to the selected letter input button is performed. Thereafter, the procedure proceeds to S10.

At S10, the CPU 41 stores the selection candidate object operated at S9 in a DB or the like as the lately operated object. Note that the lately operated object that was operated for the last time is stored for each group. However, in case of a group (for example, the group A, the group C, and the group D in case of the example shown in FIG. 5) including only one button, the lately operated object is necessarily the same button. Therefore, it is not necessary to store the lately operated object for such group.

Next, at S11, the CPU 41 determines whether to terminate the selection or the operation of the selection candidate objects displayed on the liquid crystal display 15. For example, when an ACC is turned off, or when a specific operation is accepted, the CPU 41 determines to terminate the selection or the operation of the selection candidate objects displayed on the liquid crystal display 15.

When it is determined to continue the selection or the operation of the selection candidate objects displayed on the liquid crystal display 15 (S11: NO), the procedure returns to S6. On the other hand, when it is determined to terminate the selection or the operation of the selection candidate objects displayed on the liquid crystal display 15 (S11: YES), the operation assistance process program is terminated.

As described above, in the navigation device 1 according to the present embodiment, the operation assistance method according to the navigation device 1, and the computer program executed on the navigation device 1, the selection candidate objects such as buttons and icons by GUI, and the like are classified into a plurality of groups and displayed on the liquid crystal display 15 (S4). When an operation using the jog dial 45 is accepted, the group including the selected object is switched in the order in accordance with the accepted operation and the selected object is sequentially switched within the group in the order in accordance with the accepted operation among a plurality of selection candidate objects included in the group. On the other hand, when an operation using the direction input key 46 is accepted, the group including the selected object is switched in the order in accordance with the accepted operation and the selected object is not switched within the group (S7). Therefore, when making the user perform an operation to select a selection candidate object from a plurality of selection candidate objects displayed on the liquid crystal display 15, even if there are a large number of selection candidate objects, it is possible to make the user select the user's intended selection candidate object with a simple operation. For example, when it is necessary to switch the selected object within one group (for example, when repeatedly inputting letters), it is possible to make the user perform an operation using the jog dial 45. When it is necessary to switch the selected object between groups (for example, when repeatedly changing screens), it is possible to make the user perform an operation using the direction input key 46. In addition, it enables the user to select and operate the user's desired selection candidate object with a smaller number of operations by selecting a group using the direction input key 46 and switching the selected object within the group using the jog dial 45, compared to when using only the jog dial 45.

In addition, when the direction input key 46 accepts an operation, the selection candidate object that was operated for the last time in each group is selected. Therefore, it becomes possible to let the selection candidate object, which is likely to be selected, into a selected status by priority. As a result, it becomes possible to select and operate the user's desired selection candidate object with a smaller number of operations.

In addition, a plurality of selection candidate objects displayed on the liquid crystal display 15 are classified into groups by type of selection candidate object. Therefore, when switching the selected object by operating the direction input key 46, it is possible to switch the selected object by type.

In addition, it is set such that more selection candidate objects are subject to be switched by operating the direction input key 46 compared to the direction input key 46. Therefore, when a larger number of switch operations are required, it is possible to reduce the user's operation load because the operation can be performed by dial operation that causes less operation load.

The present invention is not limited to the aforementioned embodiment. Various improvements and/or modifications may be made without departing from the broad spirit and scope of the underlying principles.

The jog dial 45 and the direction input key 46 are utilized as the operation means in the present embodiment. However, for example, other types of operation means (for example, trackball, tablet, etc.) may be utilized. In addition, the same type of a plurality of operation means (for example, two jog dials) may be utilized. In addition, three or more operation means may be utilized.

In addition, in the present embodiment, the switch operation is performed with respect to all the selection candidate objects regardless of the groups using the jog dial 45 and the switch operation is performed with respect to only the selection candidate object that was operated for the last time within each group using the direction input key 46. However, the functions may be switched between the jog dial 45 and the direction input key 46 (i.e., the switch operation is performed with respect to all the selection candidate objects using the direction input key 46 and the switch operation is performed with respect to only the selection candidate object that was operated for the last time within each group using the jog dial 45).

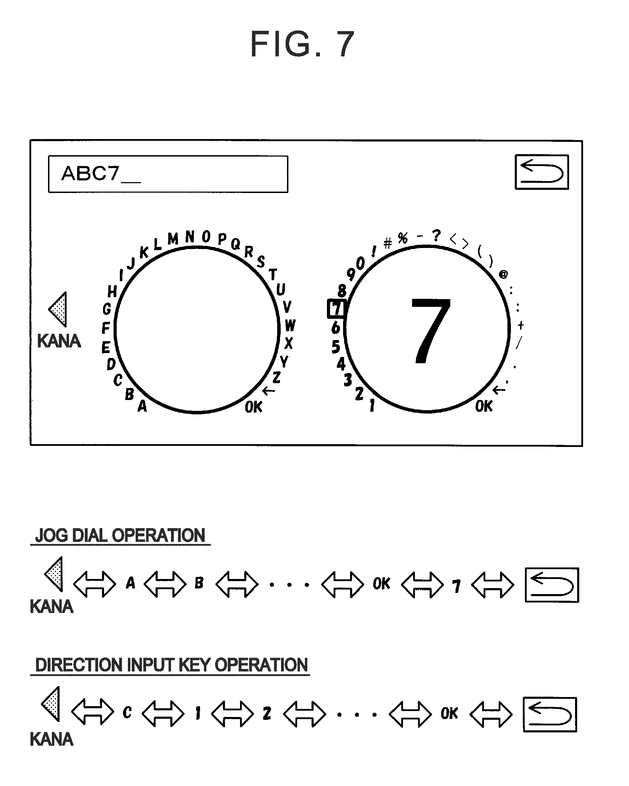

In addition, in the present embodiment, the switch operation is performed with respect to all the selection candidate objects regardless of the groups using the jog dial 45 and the switch operation is performed with respect to only the selection candidate object that was operated for the last time within each group using the direction input key 46. However, the switch operation may vary with group. For example, as shown in FIG. 7, it is configured that, in a case in which there are a group of letter input buttons for alphabetical letter input and a group of letter input buttons for number input, when the jog dial 45 is operated, regarding the group of the letter input buttons for alphabetical letter input, the selection candidate objects may be sequentially selected, and regarding the group of the letter input buttons for number input, only the lately operated object (the letter input button for "7" in the example shown in FIG. 7) that was selected for the last time may be selected. In addition, it is configured that, when the direction input key 46 is operated, regarding the group of the letter input buttons for alphabetical letter input, only the lately operated object (the letter input button for "C" in the example shown in FIG. 7) may be selected, and regarding the group of the letter input buttons for number input, the selection candidate objects may be sequentially selected.

In addition, in the present embodiment, in a case in which an operation using the jog dial 45 is accepted, it is configured that a switching operation of the selected object is performed with respect to all the selection candidate objects irrespective of the group. However, a target for switching may be limited only to the selection candidate objects belonging to a specific group. For example, in the example shown in FIG. 5, in a case in which the target for switching is limited to the group A and group B, it is configured that the selected object is switched among the selection candidate objects belonging to the group A and the group B in the order in accordance with the rotational direction. That is, even when the jog dial 45 is rotated in the right direction in a state in which "OK" in the group B is selected as the selected object, the selected object is not switched.

In addition, in the present embodiment, in a case in which an operation using the direction input key 46 is accepted, it is configured that the group including the selected object is switched with respect to all the groups. However, the group including the selected object may be switched only among specific groups. For example, in the example shown in FIG. 5, in a case in which groups target for switching are limited only to the group A, the group C, and the group D among the groups A to D, the group including the selected object is switched only among the group A, the group C, and the group D in the order in accordance with the instructed direction. In such a case, the selection candidate objects belonging to the group B will not be the target for selection. Note that the specific groups may be configured to be previously set for each display screen, or configured to be set by the user. In addition, the specific groups may be groups in which the number of candidates for the selected object included in the groups is equal to or less than a predetermined number (for example, 1). As the result, specific kinds of selection candidate objects (for example, the button 52, 54, 55 in FIG. 5) can be rapidly selected.

In the present embodiment, a case is exemplified, in which the present invention is applied to the selection of selection candidate objects displayed on the navigation device 1. However, the present invention may be applied to the selection of selection candidate objects displayed on other in-vehicle devices. For example, the present invention can be applied to audio devices, smart phones connected to a vehicle, etc. In addition, the present invention can be applied to devices other than in-vehicle devices. For example, the present invention can be applied to various kinds of devices provided with an operation means for accepting an operation of the user and a display screen that displays selection candidate objects such as personal computers, smart phones, tablet-type terminals, etc.

In addition, the embodiment in which the operation assistance system according to the present invention is realized is described above. However, the operation assistance system may include the following configurations. In such cases, the following effects are obtained.

For example, a first configuration is as follows.

The operation assistance system is characterized by including: operation means for operating the selected object in the selected status among the selection candidate objects based on the operation of the user; and storing means for storing, for each group, the selection candidate object that was operated for the last time, wherein, in a case in which the second operation input device accepts an operation, the object switch means switches the group including the selected object in an order in accordance with the accepted operation and sets, as the selected object within the group, the selection candidate object that was operated for the last time among the plurality of selection candidate objects included in the group.

According to the operation assistance system including the aforementioned configuration, in a case in which the second operation input device accepts an operation, the selection candidate object that was operated for the last time in each group is selected. Therefore, it becomes possible to let the selection candidate object, which is likely to be selected, into a selected status by priority. As a result, it becomes possible to select and operate the user's desired selection candidate object with a smaller number of operations.

A second configuration is as follows.

The operation assistance system is characterized in that the plurality of selection candidate objects displayed on the display screen are classified into groups by type of the selection candidate object.

According to the operation assistance system including the aforementioned configuration, a plurality of selection candidate objects displayed on the display screen are classified into groups by type of selection candidate object. Therefore, when switching the selected object by operating the second operation input device, it is possible to switch the selected object by type.

A third configuration is as follows.

The operation assistance system is characterized in that the first operation input device is a device that accepts a dial operation by the user, the second operation input device is a device that accepts a directional instruction operation by the user, and the object switch means, in a case in which the first operation input device accepts a dial operation, switches the group including the selected object in an order in accordance with the accepted rotational direction and sequentially switches within the group the selected object in the order in accordance with the accepted rotational direction among the plurality of selection candidate objects included in the group, and in a case in which the second operation input device accepts a directional instruction operation, switches the group including the selected object in an order in accordance with the accepted directional instruction.

According to the operation assistance system including the aforementioned configuration, the device that accepts a dial operation by the user is utilized as the first operation input device and the device that accepts a directional instruction operation by the user is utilized as the second operation input device. It can be set such that more selection candidate objects are subject to be switched by dial operations, which reduces the operation load even when a larger number of switch operations are required. Therefore, it is possible to reduce the user's operation load.

A fourth configuration is as follows.

The operation assistance system is characterized in that in a case in which the second operation input device accepts an operation, the object switch means switches the group including the selected object among specific groups of the plurality of groups.

According to the operation assistance system including the aforementioned configuration, in case of an operation on the second operation input device, the groups target for switching are limited. Therefore, even when there are a number of selection candidate objects, the user is able to select the user's intended selection candidate object rapidly.

A fifth configuration is as follows.

The operation assistance system is characterized in that the specific groups are groups in which a number of candidates for the selected object included in the groups is equal to or less than a predetermined number.

According to the operation assistance system including the aforementioned configuration, in case of an operation on the second operation input device, the groups target for switching are limited to groups including a small number of candidates for the selected object. Therefore, it is possible to rapidly select a specific kind of selection candidate objects such as list items, etc.

A sixth configuration is as follows.

The operation assistance system is characterized in that, in a case in which the first operation input device accepts an operation, all the selection candidate objects included in the group are selected as the selected object in an order in accordance with the accepted operation, and thereafter the object switch means switches the group including the selected object to a next group.

According to the operation assistance system including the aforementioned configuration, in a case in which it is required to sequentially perform switching of the selected object within a group including a number of selection candidate objects, such as inputs of kana or alphabet, etc., it is possible to reliably select the user's intended candidate for the selected object by an operation on the first operation input device.

### Description of the Reference Numerals

1: OPERATION ASSISTANCE SYSTEM
14: OPERATION PART
41: CPU
42: RAM
43: ROM
45: JOG DIAL
45: DIRECTION INPUT KEY
51: LETTER INPUT SCREEN
52-55: BUTTONS

## Claims

1. An operation assistance system provided with a first operation input device and a second operation input device that accept an operation of a user and a display screen that displays selection candidate objects serving as candidates that are selected by the user, the operation assistance system **characterized by** comprising:
object display means for classifying a plurality of selection candidate objects into a plurality of groups and displaying the classified plurality of selection candidate objects on the display screen; and
object switch means for sequentially switching a selected object that is a selection candidate object in a selected status among the plurality of selection candidate objects displayed on the display screen, based on an operation accepted by the first operation input device and the second operation input device, wherein
the object switch means,
in a case in which the first operation input device accepts an operation, switches the group including the selected object in an order in accordance with the accepted operation and sequentially switches within the group the selected object in the order in accordance with the accepted operation among the plurality of selection candidate objects included in the group; and
in a case in which the second operation input device accepts an operation, switches the group including the selected object in an order in accordance with the accepted operation and does not switch the selected object within the group.

2. The operation assistance system according to claim 1, **characterized by** comprising:
operation means for operating the selected object in the selected status among the selection candidate objects based on the operation of the user; and
storing means for storing, for each group, the selection candidate object that was operated for a last time, wherein,
in a case in which the second operation input device accepts an operation, the object switch means switches the group including the selected object in an order in accordance with the accepted operation and sets, as the selected object within the group, the selection candidate object that was operated for the last time among the plurality of selection candidate objects included in the group.

3. The operation assistance system according to claim 1 or 2, **characterized in that** the plurality of selection candidate objects displayed on the display screen are classified into groups by type of the selection candidate object.

4. The operation assistance system according to any one of claims 1 to 3, **characterized in that** the first operation input device is a device that accepts a dial operation by the user,
the second operation input device is a device that accepts a directional instruction operation by the user, and
the object switch means,
in a case in which the first operation input device accepts a dial operation, switches the group including the selected object in an order in accordance with the accepted rotational direction and sequentially switches within the group the selected object in the order in accordance with the accepted rotational direction among the plurality of selection candidate objects included in the group, and
in a case in which the second operation input device accepts a directional instruction operation, switches the group including the selected object in an order in accordance with the accepted directional instruction.

5. The operation assistance system according to any one of claims 1 to 4, **characterized in that**, in a case in which the second operation input device accepts an operation, the object switch means switches the group including the selected object among specific groups of the plurality of groups.

6. The operation assistance system according to claims 5, **characterized in that** the specific groups are groups in which a number of candidates for the selected object included in the groups is equal to or less than a predetermined number.

7. The operation assistance system according to any one of claims 1 to 6, **characterized in that**, in a case in which the first operation input device accepts an operation, all the selection candidate objects included in the group are selected as the selected object in an order in accordance with the accepted operation, and thereafter the object switch means switches the group including the selected object to a next group.

8. An operation assistance method implemented by an operation assistance system provided with a first operation input device and a second operation input device that accept an operation of a user and a display screen that displays selection candidate objects serving as candidates that are selected by the user, the operation assistance method **characterized by** comprising:
a step at which object display means classifies a plurality of selection candidate objects into a plurality of groups and displays the classified plurality of selection candidate objects on the display screen; and
a step at which object switch means sequentially switches a selected object that is a selection candidate object in a selected status among the plurality of selection candidate objects displayed on the display screen, based on an operation accepted by the first operation input device and the second operation input device, wherein
the object switch means,
in a case in which the first operation input device accepts an operation, switches the group including the selected object in an order in accordance with the accepted operation and sequentially switches the selected object within the group in the order in accordance with the accepted operation among the plurality of selection candidate objects included in the group; and
in a case in which the second operation input device accepts an operation, switches the group including the selected object in an order in accordance with the accepted operation and does not switch the selected object within the group.

9. A computer program implemented in an operation assistance system provided with a first operation input device and a second operation input device that accept an operation of a user and a display screen that displays selection candidate objects serving as candidates that are selected by the user, the computer program **characterized by** causing a computer to execute:
an object display function of classifying a plurality of selection candidate objects into a plurality of groups and displaying the classified plurality of selection candidate objects on the display screen; and
an object switch function of sequentially switching a selected object that is a selection candidate object in a selected status among the plurality of selection candidate objects displayed on the display screen, based on an operation accepted by the first operation input device and the second operation input device, wherein
the object switch function,
in a case in which the first operation input device accepts an operation, switches the group including the selected object in an order in accordance with the accepted operation and sequentially switches the selected object within the group in the order in accordance with the accepted operation among the plurality of selection candidate objects included in the group; and
in a case in which the second operation input device accepts an operation, switches the group including the selected object in an order in accordance with the accepted operation and does not switch the selected object within the group.
